# EUROPEAN PATENT SPECIFICATION

(11) **EP 2 638 759 B1**
(45) Date of publication and mention of the grant of the patent: **09.03.2016**
(21) Application number: 11788716.6
(22) Date of filing: 11.11.2011
(51) Int. Cl.: H04W 72/04, H04W 74/00

(54) **METHOD AND APPARATUS FOR ASSIGNING WIRELESS NETWORK PACKET RESOURCES TO WIRELESS TERMINALS**
VERFAHREN UND VORRICHTUNG ZUR ZUWEISUNG VON DRAHTLOSNETZWERK-PAKETRESSOURCEN AN DRAHTLOSE ENDGERÄTE
PROCÉDÉ ET DISPOSITIF D'ATTRIBUTION DE RESSOURCES EN PAQUETS DE RÉSEAU SANS FIL À DES TERMINAUX SANS FIL

(30) Priority: 10.11.2011 US 201113294138; 11.11.2010 US 412669 P
(43) Date of publication of application: 18.09.2013
(73) Proprietor: Qualcomm Incorporated, San Diego, CA 92121-1714 (US)
(72) Inventor: DHANDA, Mungal Singh, San Diego, California 92121-1714 (US); JAIN, Vikrant, San Diego, California 92121-1714 (US); CHILDREN, Philip J., San Diego, California 92121-1714 (US)
(74) Representative: Carstens, Dirk Wilhelm
(86) International application number: PCT/US2011/060427
(87) International publication number: WO 2012/065097

(56) References cited:
- US-A1- 2002 065 081
- US-A1- 2008 310 363
- US-A1- 2009 168 709
- US-A1- 2010 266 057
- HUAWEI TECHNOLOGIES CO. ET AL: 'AGCH enhancement and performance comparison', [Online] 13 October 2010, XP055081284 Retrieved from the Internet: <URL:http://www.3gpp.org/ftp/tsg_geran/Wg2_ Protocol_Aspects/GERAN2_47bis_Vienna/Docs/G 2-100300.zip> [retrieved on 2013-09-26]

## Description

### CROSS-REFERENCE TO RELATED APPLICATION & PRIORITY CLAIM

This patent application is related to and claims priority to U.S. Provisional Application No. 61/412,669, filed 11 November 2010.

### TECHNICAL FIELD

Embodiments of the present invention relate generally to communication systems and more particularly to devices, systems, and methods providing and enabling assigning packet resources of a wireless network to plural wireless terminals.

### BACKGROUND

A wireless terminal requiring network resource will transmit a request for the network resource. Each wireless terminal requests service from the network by sending a channel request over an access channel. A channel request may be sent either to request circuit-switched service or to request packet switched service. If a wireless terminal requires packet service, it sends a so-called packet channel request.

The network responds to a channel request by sending either an assignment message or an assignment reject message over an access grant channel. The assignment message indicates that a wireless terminal has been assigned a channel. The assignment reject message indicates that the wireless terminal has not been assigned a channel, and is sent when the network does not have enough resource to allocate the requested channel.

Channels including the access channel are time-divided into data slots each containing a predetermined amount of data. A typical network can receive a channel request in every data slot of the access channel. However the network can only send an assignment message or assignment reject message on the access grant channel during a small fraction of the data slots of the access grant channel. Also, the network can only send an assignment message in response to one packet channel request at any one time, each assignment message addressing only one wireless terminal. Therefore the network can respond positively to only one packet channel request at a time during only a portion of the data slots of the access grant channel. The data slots of both the access channel and the access grant channel typically contain the same number of information bits.

From the above it is clear that there is an effective imbalance between the capacities of the access channel and the access grant channel whereby, in any given time period, the network may receive many more packet channel requests than the number of assignment messages it can send in that given time period. The network is therefore not able to send an assignment message in response to every packet channel request it receives, when it receives packet channel requests in more than a small fraction of the data slots of the access channel.

A consequence is that wireless terminals which have sent packet channel requests and do not receive any response from the network will send more packet channel requests. Once a wireless terminal has transmitted a maximum number of packet channel requests, defined by the network via broadcast information, and has not received an assignment message in response, the wireless terminal will determine that an access channel failure has occurred and will trigger cell reselection. The cell reselection may require the wireless terminal to perform a registration update before it can send or receive user data. Registration updates use significant system resources and are time consuming. Multiple access channel failures can therefore lead to poorer system performance.

Existing wireless cellular networks are designed primarily to provide services to human users. The networks are dimensioned to serve a limited set of users per cell. Future networks will need to provide a new class of service to users that comprise wireless terminals of a type that does not require human intervention. One such a new class of service is known as Machine Type Communication (MTC) or Machine to Machine communication (M2M). An example of a so-called MTC wireless terminal is a smart meter that automatically reports a measured reading to an MTC server on a regular basis, by transmitting a report comprising MTC data. Other examples of such devices are personal health monitors, vehicle/goods tracking devices, environmental monitors and security monitors.

For MTC applications it is possible to have very large number of MTC wireless terminals within a very small area, particularly in the same cell. Each MTC wireless terminal may need to communicate with the network on a frequent basis and this can lead to overloading of the network when there is transmission of a large number of packet channel requests in a given time.

One possible solution is to increase the delay between adjacent channel requests from any given MTC wireless terminal but this only prolongs the problem. If the delay is too long then the MTC wireless terminal may have generated a new report while its previous report is still waiting to be sent. Hence this solution is not suitable for all cases.

An alternative solution is to have multiple pairs of access channels and access grant channels but this requires more network resources, which can be undesirable for operators.

Attention is drawn to document US2002065081 (A1), which describes a wireless network including wireless access systems for communicating with mobile stations. At least one of the wireless access systems is capable of communicating with multiple types of mobile stations. One type of mobile station communicates according to the Enhanced General Packet Radio Service (EGPRS) protocol, while another type of mobile station communicates according to the GSM/EDGE Radio Access Network (GERAN) protocol. The wireless access system includes control logic to select one of plural types of protocol stacks to use for communications over an air link with the different types of mobile stations. In response to an indicator of a first type, the wireless access system selects a first protocol stack, and in response to an indicator of a second type, the wireless access system selects a second protocol stack.

### BRIEF SUMMARY OF SOME EXEMPLARY EMBODIMENTS

The invention is defined by the independent claims. Embodiments of the invention are set forth in the dependent claims.

A transmitted single packet assignment message can be used by a network to enable packet assignment to be initiated for plural wireless terminals. This makes more efficient use of each such message when multiple packet channel requests are received by the network.

This may be advantageous when a channel via which packet assignment messages are transmitted has a lower communication capacity than a channel via which packet channel requests are received. The effective capacity of the channel via which the single packet assignment message is transmitted is at least doubled and may be tripled. The increased capacity acts to reduce congestion on the channel. This increases the probability of a wireless terminal receiving a positive response to a channel request which it sends. The probability of a subsequent successful data transfer is thereby increased.

The claimed features may result in improved efficiency of the assignment procedure for both one-phase and two-phase data transfer on the uplink and the downlink. The features may also be applied to address the problem of a bottleneck that exists in the first phase of data transfer due to limited capacity of the channel used for indicating assignment of resource to wireless terminals.

Other aspects, features, and embodiments of the present invention will become apparent to those of ordinary skill in the art, upon reviewing the following description of specific, exemplary embodiments of the present invention in conjunction with the accompanying figures. While features of the present invention may be discussed relative to certain embodiments and figures below, all embodiments of the present invention can include one or more of the advantageous features discussed herein. In other words, while one or more embodiments may be discussed as having certain advantageous features, one or more of such features may also be used in accordance with the various embodiments of the invention discussed herein. In similar fashion, while exemplary embodiments may be discussed below as device, system, or method embodiments it should be understood that such exemplary embodiments can be implemented in various devices, systems, and methods.

### BRIEF DESCRIPTION OF THE FIGURES

Further features and advantages of the invention will become clearer from consideration of the following detailed description which is given by way of example only with reference to the accompanying drawings in which:
FIG. 1 is a schematic diagram of a wireless cellular communication system according to some embodiments of the present invention.
FIG. 2 is a diagram illustrating a network apparatus and a wireless terminal in communication with each other over a wireless link according to some embodiments of the present invention.
FIG. 3 is a more detailed schematic diagram of the network apparatus shown in FIG. 2 according to some embodiments of the present invention.
FIG. 4 is a flow diagram of a process for assigning a packet channel to plural wireless terminals according to some embodiments of the present invention.
FIG. 5 is a schematic diagram representing a network apparatus and a wireless terminal of a GERAN wireless communication system according to some embodiments of the present invention.
FIG. 6 is a diagram illustrating an arrangement for a network apparatus to assign packet channels to plural wireless terminals according to some embodiments of the present invention.

### DETAILED DESCRIPTION OF SOME EXEMPLARY EMBODIMENTS

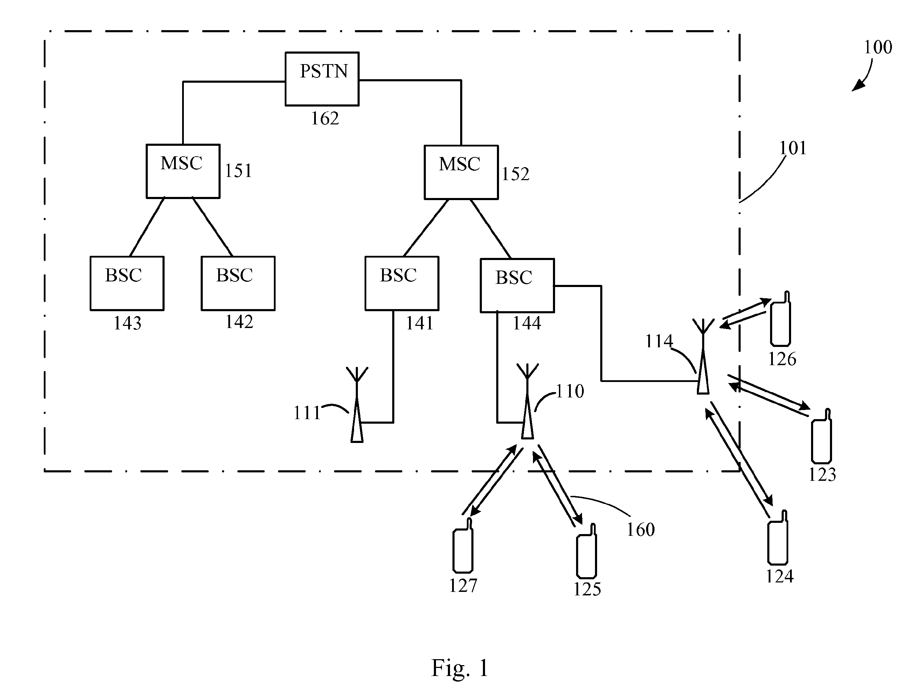

FIG. 1 is a schematic diagram of a wireless cellular communication system 100. The wireless cellular communication system 100 includes a network 101 comprising base stations 110, 111, 114, base station controllers 141-144 and mobile switching centres 151, 152. The system 100 also includes wireless terminals 123-127 which are able to communicate with the base stations 110, 111, 114 via wireless links 160. Base stations 110, 111, 114 and wireless terminals 123-127 each have a transmitter and a receiver which are used to transmit and receive signals, respectively. A downlink signal is transmitted by a base station 110, 111, 114 of the network 101 and received by a wireless terminal 123-127. An uplink signal is transmitted by a wireless terminal 123-127 and received by a base station 110, 111, 114 of the network 101.

The base station controllers 141-144 act to route signals carrying data to and from different wireless terminals 123-127 in the same cell or in different cells, under the control of the mobile switching centres 151, 152 via the base stations 110, 111 and 114. The mobile switching centres 151, 152 are connected to a public switched telephone network (PSTN) 162. Signals carrying data may be transferred between each of the wireless terminals 123-127 and communications equipment of other communications networks via the public switched telephone network 162. The public switched telephone network 162 thus allows calls to be routed between the wireless communication system 100 and other communication systems. Such other communication systems include wired systems, fibre optic systems and other mobile cellular communication systems of different types and conforming to different standards.

The wireless communication system 100 is designed so that a wireless terminal 123-127 can be registered to a selected base station (the wireless terminal's active base station) at any one time. The wireless terminal 123-127 can be registered to a different base station by a process known as cell reselection, so that the newly-assigned base station becomes the wireless terminal's active base station. Cell reselection is typically performed when a wireless terminal moves between cells, or when the quality of data sent between the active base station and the wireless terminal reduces below a threshold, or when a wireless terminal is denied a network resource which it requests, for example due to traffic congestion in the cell to which it is registered.

There exist various types of data that are transmitted in a wireless communication system. Voice data is mostly transmitted using a circuit-switched connection, as is short message service (SMS) data. Voice data is sent with minimal delay (termed latency). Data such as documents, images and video are generally sent using a packet connection in which the data are divided into so-called packets which may be sent with variable delay or latency and may be sent intermittently.

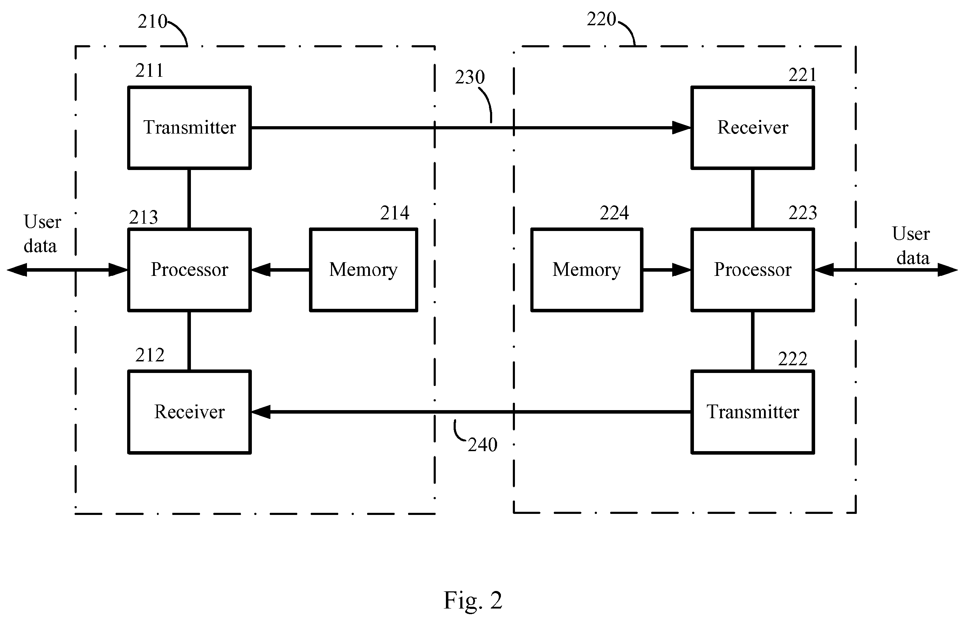

FIG. 2 is a simplified diagram illustrating a network apparatus 210 and a wireless terminal 220 in communication with each other over two wireless links comprising a downlink 230 and an uplink 240. Although only one wireless terminal 220 is shown, there will typically be a multiple number of such wireless terminals 220 each capable of communicating with the network apparatus 210 within a given time period. A base station containing one or more network apparatus 210 typically has one or more antennas that can receive and transmit signals in multiple directions. Therefore signals sent on the downlink 230 and uplink 240 are typically transmitted in multiple directions. As a consequence, a signal transmitted by the network apparatus 210 may be received by plural wireless terminals.

The functionality of network equipment varies between different networks such that base stations may have a variable degree of integration. The combined functions performed together by the BSC and the base station may be shared differently so that a more integrated base station may have functions that are commonly contained in a BSC. The network apparatus 210 in this example corresponds to either the base station 110 of FIG. 1 or the combination of base station controller 144 and base station 110 of FIG. 1, depending on what functionality is within the base station 110 of FIG. 1. The wireless terminal 220 corresponds to the wireless terminal 125 of FIG. 1.

The signals sent on the downlink 230 and uplink 240 carry user data transmitted typically on a traffic channel, and control data transmitted on a control channel. 'User data' is data for use by, or for sending by, the wireless terminal 220 and may include packet data.

The wireless terminal 220 comprises a receiver 221 for receiving data including user data and control data over the downlink 230. The wireless terminal 220 also includes a transmitter 222 which can transmit user data and control data on the uplink 240. The transmitter 222 and receiver 221 are controlled by processor 223 according to instructions and data e.g. resource parameters contained in a memory 224 coupled to the processor 223.

The network apparatus 210 comprises a transmitter 211 for transmitting data including user data and control data via the downlink 230, and a receiver 212 for receiving user data and control data via the uplink 240. The transmitter 211 and receiver 212 are controlled by processor 213 according to instructions and data contained in a memory 214 coupled to the processor 213.

Control data transmitted by the transmitter 211 of the network apparatus 210 and control data transmitted by the transmitter 222 of the wireless terminal 220 includes control data transmitted on one or more control channels.

At any given time, a number of wireless terminals 220 may require packet service of the network 101 for sending or receiving packet data. When a wireless terminal 220 requires packet service of the network 101, the wireless terminal 220 may transmit a request for a packet channel in the form of a packet channel request message. Such a packet channel request message is typically transmitted over a control channel. Control channels are commonly used in wireless communication systems for transmitting and receiving signaling information i.e. control data. Such control data is transmitted over a control channel by wireless terminals to request a packet channel. The receiver 212 of the network apparatus 210 receives the control data comprising the packet channel request message. The receiver 212 of the network apparatus 210 may also receive one or more other packet channel request messages transmitted by other wireless terminals (not shown in the figure).

The receiver 212 receives a number, m, of packet channel requests transmitted by wireless terminals within a time period. The number m is a variable number, greater than or equal to zero, that depends on the number of wireless terminals within communication range of the network apparatus 210 that send packet channel requests in the time period. The number m also depends on the number of packet channel requests that the network apparatus 210 can receive in the time period. For example, if five wireless terminals send packet channel requests within the time period and the network apparatus 210 is able to receive up to 50 packet channel requests within the period, then m is equal to 5. Alternatively, if 100 wireless terminals send packet channel requests within the time period and the network apparatus 210 is able to receive up to 50 packet channel requests within the period, then m is equal to 50.

The network 101 can respond to up to a number n of the received packet channel requests by assigning network resources to the n wireless terminals which transmitted the n packet channel requests and then transmitting an assignment message which indicates that resources have been assigned to the n wireless terminals. The number n therefore represents the number of packet channel assignments that the network apparatus will indicate within a packet assignment message. The number n is greater than or equal to zero and is less than or equal to the number m. The number n is determined by the available network resources and by the available bandwidth of the access grant channel which carries the packet assignment message. Typically n has a maximum value that is significantly less than the maximum value of m. For example the maximum value of m may be around fifty and the maximum value of n may be four.

The processor 213 of the network apparatus 210 responds to some or all of the m received packet channel request message by controlling the transmitter 211 of the network apparatus 210 to transmit either an assignment message or an assignment reject message over a control channel (access grant channel) used to assign a channel to wireless terminals. The assignment message indicates that the n wireless terminals have been assigned a packet channel. The assignment reject message indicates that the wireless terminal has not been assigned a packet channel, and is sent when the network does not have enough resource to allocate the requested packet channel.

The receiver 221 of the wireless terminal 220 receives the assignment message or alternatively the assignment reject message. The processor 223 of the wireless terminal 220 responds according to the assignment message or assignment reject message. The processor 223 responds to an assignment message by controlling the transmitter 222 to transmit a signal using the assigned packet channel indicated by the assignment message. Alternatively the processor 223 will respond to an assignment reject message by transmitting another packet channel request after a defined time interval. When the wireless terminal 220 has transmitted a defined number of packet channel requests and has not received an assignment message in response within another defined time interval, the processor 223 initiates a cell reselection.

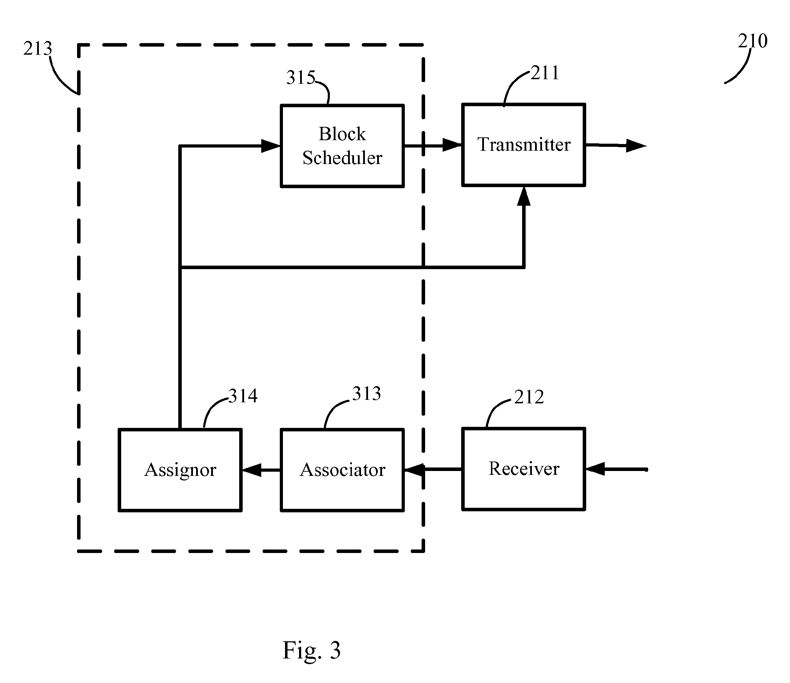

FIG. 3 is a more detailed schematic diagram of the network apparatus shown in FIG. 2. The processor 213 is shown as including various functional blocks for ease of understanding. The functions of those functional blocks may be all contained within the processor 213 or some or all of the functions may be outside the processor 213. For example some of the functions may be within a digital signal processor (DSP). It should be clear to a skilled person that various arrangements are therefore possible. The processor 213 in this example comprises an associator 313, an assignor 314 and a block scheduler 315. The receiver 212 receives a number, m, of packet channel requests transmitted by wireless terminals within a time period. The number m is a variable number, greater than or equal to zero, that depends on the number of wireless terminals within communication range of the network apparatus 210 that send packet channel requests in the time period. The number m also depends on the number of packet channel requests that the network apparatus 210 can receive in the time period. For example, if five wireless terminals send packet channel requests within the time period and the network apparatus 210 is able to receive up to 50 packet channel requests within the period, then m is equal to 5. Alternatively, if 100 wireless terminals send packet channel requests within the time period and the network apparatus 210 is able to receive up to 50 packet channel requests within the period, then m is equal to 50.

The associator 313 is coupled to the receiver 212 and associates the received packet channel requests with the wireless terminals which transmitted the packet channel requests, by identifying temporary identifications contained in the packet channel requests. The temporary identifications comprise sets of random bits which the network 101 associates temporarily with the wireless terminals which transmitted the packet channel requests. The associator outputs the temporary identifications to the assignor 314.

The assignor 314 assigns packet resources of the network to a group of n wireless terminals that include at least some of the m wireless terminals which transmitted the m packet channel requests. The number n represents the number of packet channel assignments that the network apparatus will indicate within a packet assignment message. The number n is greater than or equal to zero and is less than or equal to the number m. The maximum value for the number n is determined by the available network resources and by the available bandwidth of the access grant channel which carries the packet assignment message. Typically n has a maximum value that is significantly less than the maximum value of m. For example the maximum value of m may be around fifty and the maximum value of n may be around 5.

The assignor performs the assignment of packet resources based on priorities associated with the packet channel requests. The priorities may depend on such criteria as whether a requesting wireless terminal is requesting an emergency service, a category of user (e.g. business or private) or other criteria. The assignor 314 outputs the n temporary identifications sent by the n wireless terminals and contained within the received packet channel requests, together with indications of the assigned packet resources to the block scheduler 315 and to the transmitter 211.

The block scheduler 315 allocates a radio block comprising a number of frames. For example four frames, for transmitting a packet assignment message, and indicates the radio block to the transmitter. The transmitter 211 transmits in the indicated radio block a single packet assignment message addressed to the group of n wireless terminals.

The packet assignment message is divided into two parts. One part comprises assignment information that is common to the group of n wireless terminals and the other part comprises specific assignment information that is specific to individual wireless terminals of the group of n wireless terminals. The specific assignment information includes n sets of specific assignment information, each set being specific to an individual wireless terminal of the group of n wireless terminals. Each wireless terminal of the group uses the set of specific assignment information that is specific to that wireless terminal to set specific channel parameters for that wireless terminal to use in communicating with the network.

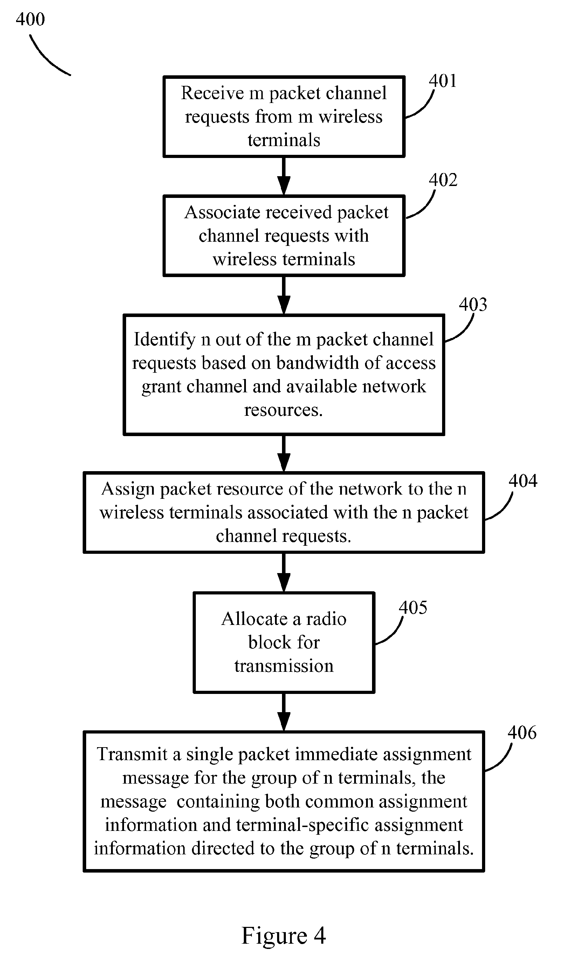

FIG. 4 is a flow diagram of a process 400 for assigning a packet channel to plural wireless terminals (123-127 of FIG. 1, 220 of FIG. 2), the process 400 being suitable for use by the network apparatus 210 of Figs. 2 and 3. In block 401 a number, m, of packet channel requests are received by the network apparatus during a time period, the packet channel requests having been transmitted by m wireless terminals such as the wireless terminal 220 of FIG. 2. There may be many packet channel requests transmitted during the time period, which the network apparatus receives. Therefore m could be a large number, for example a number of the order of 50. Equally, m could be zero if no wireless terminals make requests in the time period.

In block 402 the m received packet channel requests are associated with the m wireless terminals by means of temporary identifications included in the m packet channel requests. The temporary identifications are used to reduce or avoid conflicts by making it less likely that two channel requests will be interpreted by the network apparatus as being the same channel request.

In block 403 a portion n of the m received packet channel requests is identified, where n may be less than or equal to m, as described above. The network apparatus cannot always respond immediately to all m packet channel requests received because the network apparatus can only respond to a limited number of packet channel requests in a given time interval. This is due to limited bandwidth of the access grant channel. The network apparatus may only be able to respond to up to a maximum number of packet channel requests in a given time interval due to limited communication bandwidth of the access grant channel via which the network apparatus 210 responds to channel requests it receives. Additionally the available network packet resources may be limited. For example there may be no network packet resource that is unused and is available. The network apparatus 210 therefore identifies the n packet channel requests (a) based on bandwidth of the access grant channel and (b) based on available network packet resources. The number n may be zero and is in any case less than or equal to m.

In block 404 the network responds to the n packet channel requests by assigning packet resources of the network to the group of n wireless terminals associated with the n packet channel requests. The number n may be between one and four, for example.

In block 405, a single radio block comprising a number of data frames, for example four data frames, is allocated for transmission of an assignment message. A radio block is a set of data frames (e.g. four frames) that contain enough data to contain an assignment message or an assignment reject message.

In block 406, a single assignment message is transmitted in the single allocated radio block by the network apparatus 210 of FIG. 2. When the network apparatus 210 transmits an assignment message, the assignment message indicates that network resource has been assigned to the group of n wireless terminals. The assignment message contains common assignment information and terminal-specific assignment information, both directed to the group of n wireless terminals. The common assignment information is information that is common to all of the n wireless terminals 220 addressed by the assignment message, each addressed wireless terminal 220 using the common assignment information to set parameters within the wireless terminal 220 for communicating with the network apparatus 210. The specific assignment information is information that is specific to individual ones of the addressed wireless terminals. Each addressed wireless terminal uses its own specific assignment information to set parameters within the wireless terminal 220 for communicating with the network apparatus 210.

The specific assignment information includes at least one set of specific assignment information, each set being specific to an individual wireless terminal of the group of n wireless terminals, where n is between zero and m. Each wireless terminal of the group uses the set of specific assignment information that is specific to that wireless terminal to set specific channel parameters for that wireless terminal to use in communicating with the network.

The above-description of examples and the associated drawings serve to show general principles of operation and general features that may be applied to many different types of wireless communication system. The following part of the description will describe how those general principles of operation and general features can be applied to a particular type of wireless communication system.

General Packet Radio System (GPRS) is a set of standards defining how packet data is transmitted and received in wireless communications systems complying with a set of telecommunication standards known as Global System for Mobile Communications (GSM). A further development of GPRS is a set of standards known collectively as Enhanced GPRS (EGPRS) otherwise known as Enhanced Digital GSM Evolution (EDGE). All these sets of standards are known collectively as GSM/ EDGE Radio Access Network (GERAN) and are maintained by the standards-setting organization known as the Third Generation Partnership Project (3GPP).

According to GERAN, data is transmitted over channels which comprise physical channels and logical channels. A physical channel comprises one or more a timeslots and one or more frequencies. An example of a physical channel is a control channel for transmitting control data using a downlink frequency and a downlink time slot, and for transmitting control data using a corresponding uplink frequency and uplink time slot. Data is transmitted in data frames, and data frames are grouped into groups which contain 51 data frames. The groups of frames are known as 51-multiframes. The 51-multiframes are divided into radio blocks, each of which comprises four frames of a 51-multiframe. According to present GERAN standards, an assignment message is sent in a single radio block.

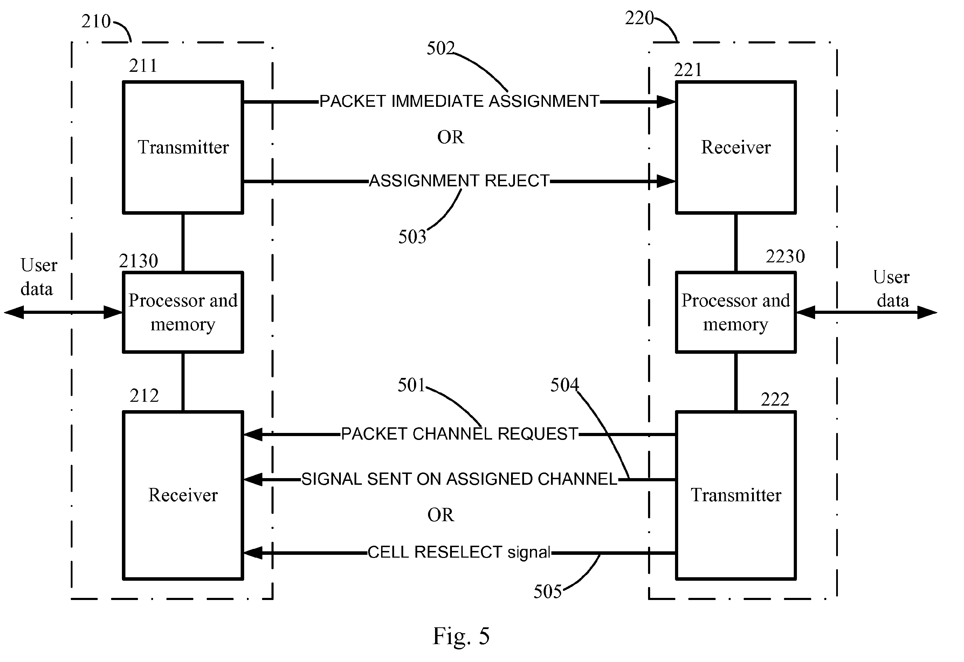

FIG. 5 is a schematic diagram representing a network apparatus 210 and a wireless terminal 220 of a GERAN wireless communication system. The network apparatus 210 comprises a transmitter 211, a receiver 212 and a processor and memory subsystem 2130. The wireless terminal comprises a receiver 221, a transmitter 222 and a processor and memory subsystem 2230. The wireless terminal 220, when it requires a packet channel for sending or receiving packet data, transmits via transmitter 222 a request for a packet channel in the form of a 'PACKET CHANNEL REQUEST message' 501 over a common control channel known as the random access channel (RACH). The RACH can contain one or more slots of RACH data (RACH slots) per data frame.

The network apparatus 210 of the GERAN system receives the PACKET CHANNEL REQUEST message 501 using its receiver 212. The network apparatus 210 can receive a PACKET CHANNEL REQUEST message in every slot of the RACH. This means that it is possible for the network apparatus 210 to receive up to 51 PACKET CHANNEL REQUEST messages from the wireless terminal 220 and other different wireless terminals in a 51-multiframe, if 51 or more wireless terminals transmit a packet channel request within the duration of the 51-multiframe.

The network apparatus 210 responds to the received PACKET CHANNEL REQUEST message by transmitting, via transmitter 211, either a 'PACKET IMMEDIATE ASSIGNMENT message' 502 or alternatively an 'ASSIGNMENT REJECT message' 503 over a common control channel called the access grant channel (AGCH). The PACKET IMMEDIATE ASSIGNMENT message indicates that the wireless terminal 220 has been assigned a packet channel. The ASSIGNMENT REJECT message 503 indicates that the wireless terminal 220 has not been assigned a packet channel, and is sent when the network does not have enough resource to allocate the requested packet channel.

The wireless terminal 220 receives, via receiver 221, the PACKET IMMEDIATE ASSIGNMENT message 502 or ASSIGNMENT REJECT message 503. The wireless terminal 220 then responds according to the PACKET IMMEDIATE ASSIGNMENT message 502 or ASSIGNMENT REJECT message 503. The processor 223 of the wireless terminal 220 responds to the PACKET IMMEDIATE ASSIGNMENT message by controlling the transmitter 222 of the wireless terminal 220 to transmit a signal 504 using the assigned packet channel indicated by the PACKET IMMEDIATE ASSIGNMENT message 502. Alternatively the processor 223 will respond to an ASSIGNMENT REJECT message 503 by transmitting another PACKET CHANNEL REQUEST message 501 after a defined time interval. When the wireless terminal 220 has transmitted a defined number of PACKET CHANNEL REQUEST messages and has not received a PACKET IMMEDIATE ASSIGNMENT message 502 in response within another defined time interval, the processor 223 initiates a cell reselection by transmitting a CELL RESELECT INITIATE signal 505.

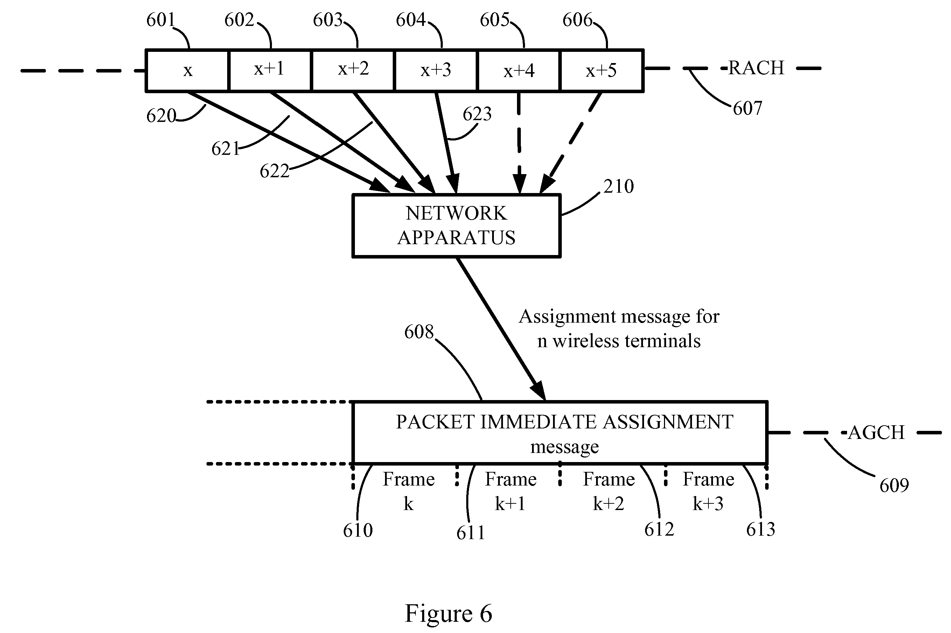

FIG. 6 is a diagram illustrating an arrangement for a network apparatus 210 to assign packet channels to plural wireless terminals (not shown). Six packet channel requests are transmitted by wireless terminals in slots x to (x+5) 601-606, on the random access channel (RACH) 407. Further packet channel requests are transmitted by other wireless terminals and are not shown in the figure. A wireless network apparatus 210 receives most if not all the transmitted packet channel requests, depending on signal path conditions.

The network apparatus 210 receives the six transmitted channel requests and selects for processing m (in this example four) of the six transmitted packet channel requests, as shown by arrows 620-623. The network apparatus 210 selects only four of the six packet channel requests in this example because it can only respond positively to a maximum of four channel requests using a single assignment message.

The network apparatus 210 determines that it will respond positively to n packet channel requests (where n ≤ m) using a single assignment message. The determination of the number n is based on bandwidth of the access grant channel (determined by message size and frequency) and also based on available network resources. In this example the network apparatus 210 can respond to up to a maximum of four channel requests by transmitting a single assignment message in a single radio block. In this example n is equal to 4 because the network has enough resources to assign channels to four wireless terminals.

The network apparatus 210 transmits an assignment message. The assignment message is transmitted in the form of a 'PACKET IMMEDIATE ASSIGNMENT message' 608 on the access grant channel (AGCH) 609 in frame numbers k, k+1, k+2 and k+3 610-613. This arrangement makes better use of the AGCH in that the message can address more than one wireless terminal (in the case of a GERAN system, up to four terminals). The message indicates that network packet resource has been assigned to the addressed wireless terminals. The information content of the PACKET IMMEDIATE ASSIGNMENT message is described below and illustrated in the following table.

The information content of the PACKET IMMEDIATE ASSIGNMENT message is contained in seven information elements. The first five of these seven information elements are:
- the L2 Pseudo Length information element;
- the RR management Protocol Discriminator information element;
- the Skip Indicator information element;
- the Immediate Packet Assignment Message Type information element; and
- the Page Mode information element.

These five information elements, known as IE's, are standard information elements defined according to the present GERAN standards.

The last two information elements are the Channel Coding Command information element and the PACKET IMMEDIATE ASSIGNMENT (PIA) Rest Octets information element. These two information elements together contain the common assignment information and the specific assignment information referred to above in relation to Figs. 2 to 5. The table below shows details of the seven information elements of the PACKET IMMEDIATE ASSIGNMENT message.

**PACKET IMMEDIATE ASSIGNMENT message content**

| **Information element** | **Type / Reference** | **Presence** | **Format** | **length** |
|---|---|---|---|---|
| L2 Pseudo Length | L2 Pseudo Length | M | V | 1 |
| RR management Protocol Discriminator | Protocol Discriminator | M | V | 1/2 |
| Skip Indicator | Skip Indicator | M | V | 1/2 |
| Immediate Packet Assignment Message Type | Message Type | M | V | 1 |
| Page Mode | Page Mode | M | V | 1/2 |
| Channel Coding Command | Modulation and Coding | M | V | 1/2 |
| PIA Rest Octets | IA Rest Octets | M | V | 19 |

The 'PIA Rest Octets' information element, listed at the end of the above table, is similar to a PIA Rest Octets information element used in the present GERAN standards. According to the present GERAN standards the PIA Rest Octets information element consists of a fixed number of bits which are used to assign a channel to a given wireless terminal.

In the current example, the PIA Rest Octets information element contains the same fixed number of bits but the bits are arranged differently. The fixed number of bits includes a common set of bits defining the common assignment information and at least one specific set of bits which together define the specific assignment information. Each specific set of bits defines terminal-specific assignment information used to assign a packet channel to a different wireless terminal. This means that the PACKET IMMEDIATE ASSIGNMENT message can carry packet assignment information for more than one wireless terminal (up to four in this example). Each specific set of bits is used to carry specific packet assignment information for an individual wireless terminal of the group.

A wireless terminal receives the PACKET IMMEDIATE ASSIGNMENT message which contains the specific packet assignment information for the wireless terminal and may contain specific packet assignment information for one or more other terminal, together with common assignment information. The wireless terminal combines its own specific assignment information (as distinct from specific assignment information for other terminals) with the common assignment information to produce combined assignment information for the terminal. The PACKET IMMEDIATE ASSIGNMENT message provides only the essential packet assignment information for each wireless terminal requesting packet resource of the network. The common assignment information is defined to be common for all of the wireless terminals that are addressed by the PACKET IMMEDIATE ASSIGNMENT message. The specific assignment information is defined to be specific to individual terminals of the wireless terminals that are addressed by the PACKET IMMEDIATE ASSIGNMENT message.

A summary of the types of information contained in the PIA Rest Octets information element of the PACKET IMMEDIATE ASSIGNMENT message, and characteristics of each such type of information, will now be given by way of example.

All addressed wireless terminals are assigned the same frequency and timeslot. There is only one base absolute frame number FN, computed from T1', T2 and T3. All wireless terminals compute their own absolute frame numbers relative to this base absolute frame number by adding the value of FN_OFFSET to FN, where FN_OFFSET >= 0.

For single block assignments the assigned radio block is defined by the relative starting time. The relative starting time defines the number of frames from the frame number containing the packet assignment message.

For EGPRS temporary block flow (TBF) assignment, the window size is assumed to be the default value appropriate for the number of timeslots assigned. In the PACKET IMMEDIATE ASSIGNMENT message only a single time slot is assigned.

No ALPHA value is provided. Wireless terminals addressed by the assignment message will use a broadcast value or a default value.

It is assumed that all wireless terminals addressed by the assignment message will use coding scheme MCS-1 or coding scheme CS-1 for radio link control (RLC) data blocks containing temporary logical link identity (TLLI).

For the case of downlink TBF it is assumed that all wireless terminals addressed by the assignment message will use the same link quality measurement mode. Presence of this field also indicates that the downlink TBF is operating in EGPRS, otherwise the downlink TBF is operating in GPRS mode.

For TBF assignments, a Channel Coding Command defines the modulation and coding for the assigned uplink TBF, as follows:

a) If GPRS TBF is assigned then the Channel Coding Command takes one of the values from the set of coding schemes CS-1, CS-2, CS-3 and CS-4.

b) If EGPRS TBF is assigned then the Channel Coding Command takes one of the values from the set of coding schemes MCS-1, MCS-2, MCS-3, MCS-4, MCS-5, MCS-6, MCS-7, MCS-8 and MCS-9.

Further details of the contents of the PIA Rest Octets information element are described below with reference to pseudo code listings. The PIA Rest Octets include:
- a definition of a Packet Uplink Assignment,
- a definition of a Packet Single Block Uplink Assignment, and
- a definition of a Packet Downlink Assignment,

Each definition is designated in the following pseudo code listings by corresponding headings contained within triangular brackets. The pseudo code listing immediately below defines what is contained in the PIA Rest Octets information element at the highest level:

```
           <PIA Rest Octets> ::=
                       { LL
           |LH < Packet Uplink Assignment >
           |HH <Packet Single Block Uplink Assignment >
           |HL < Packet Downlink Assignment >
                       }
                      <spare padding>;
```

The definition of a Packet Uplink Assignment is represented by the following pseudo code listing:

```
                      <Packet Uplink Assignment > : :=
                       { 1 { < Random Reference : bit (11) >
                                             < FN_OFFSET: bit (6) > ;
                       Offset added to FN computed from T1', T2 & T3.
                                             < GAMMA : bit (5) >
                                             < Timing Advance : bit (6) >
                                             < TFI_ASSIGNMENT : bit (5) >
                                             < USF: bit (3) >
                                  } ** 0; Repeated as many times as necessary,
                       limited by the space in the message.
                                  < T1' : bit (5) >
                                  < T2: bit (5) >
                                  < T3: bit (6) >
                                  < TN : bit (3) >
                                  < TBF_MODE: bit (1) > ; This bit only
                      relevant for TBF assignment. 0 means GPRS TBF, 1 means
                      EGPRS TBF
                                  0 ; Use BCCH frequency
                                  |1 {< Frequency Parameters: Frequency Parameters
                      IE >}
                       }
```

The above-listed parameters Random Reference, FN_OFFSET, GAMMA, Timing Advance, TFI_ASSIGNMENT, and USF are included in the PACKET IMMEDIATE ASSIGNMENT message for each wireless terminal of the group of wireless terminals that is addressed by the message. These parameters together represent specific assignment information for each of the wireless terminals in the group of n wireless terminals addressed by the message. This is denoted by the text "** 0; Repeated as many times as necessary, limited by the space in the PACKET IMMEDIATE ASSIGNMENT message."

For example, when three wireless terminals are addressed by the message, the message contains three instances of FN_OFFSET, three instances of GAMMA, three instances of Timing Advance, three instances of TFI_ASSIGNMENT, and three instances of USF. Each instance of a parameter is directed to a specific wireless terminal of the group. The specific parameters will now be described briefly.

An 11-bit Random Reference number is defined for each wireless terminal being addressed, and serves as a temporary identity for the wireless terminal. This random reference number is sent by a wireless terminal in a channel request message and is used by the network to distinguish between different channel requests from different wireless terminals. The random reference number is received by the wireless terminals that have sent channel requests and used by each of those wireless terminals to determine if it is likely that the PACKET IMMEDIATE ASSIGNMENT message is intended for it.

A 6-bit frame offset number is defined as FN_OFFSET and represents a number of frames offset of a frame number relative to a defined base absolute frame number FN. The other wireless terminals in the group transmit their signals later than the first wireless terminal by applying the frame offset value FN_OFFSET.

The base absolute frame number FN is typically the frame number of the frame during which a first wireless terminal of the group of n wireless terminals will transmit a signal in response to the PACKET IMMEDIATE ASSIGNMENT message, the first wireless terminal transmitting its signal earliest, and the other wireless terminals in the group transmitting their signals later by applying the frame offset value FN_OFFSET.

GAMMA is a 5-bit parameter which defines parameters relating to a required signal power for the transmitted signal. This value depends upon for example values of signal power levels received at the wireless terminal.

A 6-bit Timing Advance value serves to define the timing of signals transmitted by the wireless terminal to ensure the transmitted signals are received at the network during a specified time slot.

A 5-bit TFI information (temporary flow indicator) field serves as a further temporary identification for the wireless terminals (in addition to the random reference number). The TFI_ASSIGNMENT field (5 bit field) is the binary representation of the Temporary Flow Identity. In downlink RLC/MAC control blocks, this field indicates the mobile station to which the control message is addressed. Further detail can be found in 3GPP TS 44.060, section 10.4.10.

A 3-bit uplink status flag (USF) determines the radio block in which a wireless terminal can send data, once the assignment of a channel has been performed.

The parameters T1', T2, T3, TN, "Use BCCH frequency", and "Frequency Parameters" together represent common assignment information that is common to all of the group of n wireless terminals addressed by the PACKET IMMEDIATE ASSIGNMENT message. Therefore only one instance of each parameter need be included in the message and is used by all the n wireless terminals in the addressed group. These common parameters will now be described briefly.

T1', T2, T3 are together used to calculate the base absolute frame number FN described above.

TN defines a time slot number for the wireless terminals to use for transmitting data. The same time slot is used by all the n wireless terminals in the group of wireless terminals addressed by the PACKET IMMEDIATE ASSIGNMENT message.

A 1-bit TBF_MODE: bit is only relevant for a TBF (temporary block flow) assignment. When the TBF_MODE bit has a value of 0, this indicates that a GPRS temporary block flow (TBF) is assigned, and when the TBF_MODE bit has a value of 1 this indicates that an EGPRS TBF is assigned.

A single-bit flag (0 or 1) serves to indicate whether to use a BCCH frequency for transmitting the data. If the value of the bit is 0, then the bit indicates that the BCCH frequency shall be used. If the value of the bit is 1, then the bit indicates that the BCCH frequency shall not be used.

A 'Frequency Parameters' information element is used when the single-bit flag (described immediately above) has value 1. The Frequency Parameters information element is used to define a channel frequency other than the BCCH to use for transmitting the data. Whether or not a control channel is used, the same frequency is used by all the n wireless terminals in the group of wireless terminals addressed by the PACKET IMMEDIATE ASSIGNMENT message.

The Packet Single Block Uplink Assignment will now be described. The Packet Single Block Uplink Assignment represents the first phase of a two-phase uplink assignment, each of the two phases having a different contention resolution procedure. The contention procedure of the second phase is more robust (using more bits of information) and therefore the second phase tends to be used when sending and receiving large amounts of data. For small amounts of data e.g. small messages, only the first phase tends to be used. The contention resolution of the first phase makes more efficient use of communication bandwidth but is less robust. For MTC communications, the first phase would mostly be used and the second phase would seldom be used. A Packet Single Block Uplink Assignment is defined for each wireless terminal being addressed by the PACKET IMMEDIATE ASSIGNMENT message. The definition of a Packet Single Block Uplink Assignment is represented by the following pseudo code listing:

```
                      <Packet Single Block Uplink Assignment > : :=
                       { 1 { < Random Reference : bit (11) >
                                             < FN_OFFSET: bit (6) > ;
                       Offset added to FN computed from T1', T2 & T3.
                                             < GAMMA : bit (5) >
                                             < Timing Advance : bit (6) >
                                             < Relative Starting Time: bit (6) >
                                  } ** 0; Repeated as many times as necessary,
                       limited by the space in the message.
                                  < T1' : bit (5) >
                                  < T2: bit (5) >
                                  < T3: bit (6) >
                                  < TN : bit (3) >
                                  0 ; Use BCCH frequency
                                  |1 {< Frequency Parameters: Frequency Parameters
                      IE >}
                       }
```

The above-listed parameters Random Reference, FN_OFFSET, GAMMA, Timing Advance, and Relative Starting Time together represent specific assignment information for each wireless terminal of the group of wireless terminals that is addressed by the message. This is denoted by "** 0; Repeated as many times as necessary, limited by the space in the message." It will be noted that several fields of information in the Packet Single Block Uplink Assignment listed immediately above are also present in the Packet Uplink Assignment information described earlier. Those fields will not be described again here.

The Packet Downlink Assignment will now be described. The definition of a Packet Downlink Assignment is represented by the following pseudo code listing:

```
                      < Packet Downlink Assignment > ::=
                       {
                                  1 { < TLLI : bit (32) >
                                             < TFI_ASSIGNMENT : bit (5) >
                                             < GAMMA : bit (5) >
                                              { 0|1 < Timing Advance : bit (6) > }
                                  } ** 0 Repeated as many times as necessary,
                       limited by the space in the message
                                  < RLC_MODE : bit >
                                  < TN : bit (3) >
                                  0|1 <
                      LINK_QUALITY _MEASUREMENT_MODE: bit (2) > ; Also
                       indicates EGPRS TBF.
                                  0 ; Use BCCH frequency
                                  |1 {< Frequency Parameters: Frequency Parameters
                      IE >}
                       }
```

TLLI, TFI_ASSIGNMENT, GAMMA, AND Timing Advance together represent specific assignment information.

RLC_MODE, TN, LINK_QUALITY_MEASUREMENT_MODE, and Frequency Parameters together represent common assignment information.

It will be noted that the TFI_ASSIGNMENT field, the GAMMA field, the Timing Advance field, the TN field and the Frequency Parameters field are also present in the Packet Uplink Assignment information described earlier. Those fields will not be described again here.

The TLLI is a 32-bit code that serves as a temporary identity for the wireless terminal while the terminal is in attached mode.

The RLC mode information includes TN (3-bit time slot number). Two LINK QUALITY MEASUREMENT MODE bits serve to indicate either a GPRS TBF or an EGPRS TBF.

Once a wireless terminal has received the PACKET IMMEDIATE ASSIGNMENT message and has been configured to use the newly assigned packet resource, the network apparatus may then optionally assign each wireless terminal additional/different resources using existing or legacy GERAN protocol procedures.

The functions described herein may be implemented in hardware, software, firmware, or any combination thereof. The functions may be stored on a computer-readable medium or transmitted as one or more instructions or code over a computer-readable medium. Computer-readable media include any available medium that can be accessed by a computer or that facilitates transfer of a computer program or code in the form of instructions or data structures from one entity to another entity or from one place to another place. Computer-readable media include, but are not limited to, computer storage media, communication media, memory, optical storage, magnetic storage, or a connection. For example, if software is transmitted from a website, server, or other remote source using a connection, that connection is included in the definition of computer-readable medium and can include but is not limited to coaxial cable, fiber optic cable, twisted pair, digital subscriber line (DSL), or wireless technologies such as infrared, radio, and microwave. The terms disk and disc as used herein include compact disc (CD), laser disc, optical disc, digital versatile disc (DVD), floppy disk and blu-ray disc and may comprise any means for reproducing data magnetically or optically. Combinations of the above types of media should also be included within the scope of computer-readable media.

The above description is given by way of example only. Modifications and variations such as may occur to those possessed of appropriate knowledge and skills may be made without departure from the scope of the invention as set forth in the appended claims and equivalents thereof.

## Claims

1. A method (400) of assigning packet resource of a wireless network to plural wireless terminals (220), the method comprising:
receiving (401) packet channel requests (501);
associating (402) the packet channel requests with wireless terminals (220) by means of temporary reference numbers included in the packet channel requests;
responding to at least one of the received packet channel requests by assigning (404) packet resource to a plurality of wireless terminals; and
transmitting (406) in a single radio block a single packet assignment message (502) addressed to the plurality of wireless terminals, wherein the single packet assignment message comprises said separate temporary reference number for each wireless terminal of the plurality of wireless terminals that are addressed by the single packet assignment message.

2. The method (400) according to claim 1, further comprising transmitting (406) the single packet assignment message so that the single packet assignment message comprises both common assignment information that is common to the plurality of wireless terminals and specific assignment information that is specific to individual ones of the plurality of wireless terminals.

3. The method (400) of claim 2, further comprising transmitting the single packet assignment message so that the common assignment information comprises an indication of a base absolute frame number, wherein said plurality of wireless terminals compute their own absolute frame numbers relative to said base absolute frame number.

4. The method (400) of claim 3, comprising transmitting the single packet assignment message so that the terminal-specific assignment information comprises an indication of a frame number offset value representing a number of frames offset from the base absolute frame number.

5. The method (400) of claim 2, wherein the assigning the packet resource comprises at least one of the following:
assigning a coding scheme and wherein the transmitting comprises transmitting the single packet assignment message so that the common assignment information comprises an indication of the coding scheme,
assigning a channel frequency and time slot and wherein the transmitting comprises transmitting the single packet assignment message so that the common assignment information comprises an indication of the channel frequency and time slot,
assigning a channel frequency used for a broadcast channel and the transmitting comprises transmitting the single packet assignment message so that the common assignment information comprises an indication of the channel frequency used for the broadcast channel, or
assigning a relative starting time defining a number of frames difference from a frame number corresponding to a frame containing the single packet assignment message, and the transmitting comprises transmitting the single packet assignment message so that the terminal-specific assignment information comprises an indication of the relative starting time.

6. The method (400) of claim 2, further comprising transmitting broadcast assignment information on a broadcast channel, the broadcast assignment information and the common assignment information together forming combined common assignment information.

7. A method for use in a wireless terminal apparatus (220), comprising:
receiving in a single radio block a single packet assignment message (502) addressed to the wireless terminal apparatus and to at least one other wireless terminal apparatus and containing assignment information, wherein the single packet assignment message comprises a separate temporary reference number for each wireless terminal apparatus of a plurality of wireless terminal apparatuses that are addressed by the single packet assignment message; and
responding to the single packet assignment message by transmitting a signal (504) based on the assignment information.

8. The method according to claim 7, further comprising:
receiving the single packet assignment message (502) when the single packet assignment message comprises both common assignment information that is common to both the wireless terminal apparatus and the at least one other wireless terminal apparatus and specific assignment information that is specific to the wireless terminal apparatus; and
responding to the single packet assignment message by transmitting a signal based on the common assignment information and the specific assignment information.

9. A wireless network apparatus (210) for assigning packet resource of a wireless network to plural wireless terminals (220), the wireless network apparatus comprising:
means for receiving (212) packet channel requests;
means for associating (313) the packet channel requests with wireless terminals (220) by means of temporary reference numbers included in the packet channel requests;
means for responding to at least some of the received packet channel requests by assigning packet resource to a plurality of wireless terminals; and
means for transmitting (211) in a single radio block a single packet assignment message addressed to the plurality of wireless terminals, wherein the single packet assignment message comprises said separate temporary reference number for each wireless terminal of the plurality of wireless terminals that are addressed by the single packet assignment message.

10. The wireless network apparatus (210) according to claim 9, wherein the means for transmitting further comprises:
means for transmitting common assignment information that is common to the plurality of wireless terminals and specific assignment information that is specific to individual ones of the plurality of wireless terminals.

11. The wireless network apparatus (210) of claim 10, wherein the means for transmitting further comprises means for transmitting the single packet assignment message so that the common assignment information comprises an indication of a base absolute frame number, wherein said plurality of wireless terminals compute their own absolute frame numbers relative to said base absolute frame number.

12. The wireless network apparatus of claim 11, wherein the means for transmitting further comprises means for transmitting the single packet assignment message so that the terminal-specific assignment information comprises an indication of a frame number offset value representing a number of frames offset from the base absolute frame number.

13. A wireless terminal apparatus (220) comprising:
means for receiving (221) in a single radio block a single packet assignment message (502) addressed to the wireless terminal apparatus and to at least one other wireless terminal apparatus and containing assignment information, wherein the single packet assignment message comprises a separate temporary reference number for each wireless terminal apparatus of a plurality of wireless terminal apparatuses that are addressed by the single packet assignment message; and
means for responding (222) to the single packet assignment message by transmitting a signal (504) based on the assignment information.

14. The wireless terminal apparatus (220) according to claim 13, said apparatus further operable to:
receive the single packet assignment message (502) when the single packet assignment message comprises both common assignment information that is common to both the wireless terminal apparatus and the at least one other wireless terminal apparatus and specific assignment information that is specific to the wireless terminal apparatus; and
respond to the single packet assignment message by transmitting a signal based on the common assignment information and the specific assignment information.

15. A computer readable medium comprising instructions which when carried out by a computer perform the functions of any of claims 1 to 8.

## Patentansprüche

1. Ein Verfahren (400) zum Zuweisen von Paketressourcen eines Drahtlosnetzwerks an mehrere Drahtlosendgeräte (220), wobei das Verfahren Folgendes aufweist:
Empfangen (401) von Paketkanalanfragen (501);
Assoziieren (402) der Paketkanalanfragen mit Drahtlosendgeräten (220) mittels temporärer Referenznummern, die in den Paketkanalanfragen enthalten sind;
Antworten auf die wenigstens eine der empfangenen Paketkanalanfragen durch Zuweisen (404) von Paketressourcen an eine Vielzahl von Drahtlosendgeräten; und
Senden bzw. Übertragen (406), in einem einzelnen Funkblock, einer Einzelpaketzuweisungsnachricht (502), die an die Vielzahl von Drahtlosendgeräten adressiert ist, wobei die Einzelpaketzuweisungsnachricht die separate, temporäre Referenznummer für jedes Drahtlosendgerät der Vielzahl von Drahtlosendgeräten aufweist, die durch die Einzelpaketzuweisungsnachricht adressiert werden.

2. Verfahren (400) nach Anspruch 1, das weiter Senden (406) der Einzelpaketzuweisungsnachricht aufweist, so dass die Einzelpaketzuweisungsnachricht sowohl gemeinsame Zuweisungsinformation, die für die Vielzahl von Drahtlosendgeräten gemeinsam vorliegt als auch spezifische Zuweisungsinformation aufweist, die für individuelle der Vielzahl von Drahtlosendgeräten spezifisch ist.

3. Verfahren (400) nach Anspruch 2, das weiter Senden der Einzelpaketzuweisungsnachricht aufweist, so dass die gemeinsame Zuweisungsinformation eine Anzeige einer grundlegenden, absoluten Rahmennummer aufweist, wobei die Vielzahl von Drahtlosendgeräten ihre eigenen, absoluten Rahmennummern relativ zu der grundlegenden, absoluten Rahmennummer berechnet.

4. Verfahren (400) nach Anspruch 3, das Senden der Einzelpaketzuweisungsnachricht aufweist, so dass die endgerätspezifische Zuweisungsinformation eine Anzeige eines Rahmennummerversatzwertes anzeigt, der einen Versatz in einer Anzahl von Rahmen von der grundlegenden, absoluten Rahmennummer darstellt.

5. Verfahren (400) nach Anspruch 2, wobei die Zuweisung der Paketressourcen wenigstens eines von Folgendem aufweist:
Zuweisen eines Codierschemas und wobei das Senden Senden der Einzelpaketzuweisungsnachricht aufweist, so dass die gemeinsame Zuweisungsinformation eine Anzeige des Codierschemas aufweist;
Zuweisen einer Kanalfrequenz und eines Zeitschlitzes und wobei das Senden Senden der Einzelpaketzuweisungsnachricht aufweist, so dass die gemeinsame Zuweisungsinformation eine Anzeige der Kanalfrequenz und des Zeitschlitzes aufweist,
Zuweisen einer Kanalfrequenz, die für einen Broadcastkanal verwendet wird, und wobei das Senden Senden der Einzelpaketzuweisungsnachricht aufweist, so dass die gemeinsame Frequenzzuweisungsinformation eine Anzeige der Kanalfrequenz aufweist, die für den Broadcast-Kanal verwendet wird, oder
Zuweisen einer relativen Startzeit, die eine Differenz in Form einer Anzahl von Rahmen von einer Rahmennummer definiert, die einem Rahmen entspricht, der die Einzelpaketzuweisungsnachricht enthält, und wobei das Senden Senden der Einzelpaketzuweisungsnachricht aufweist, so dass die endgerätespezifische Zuweisungsinformation eine Anzeige der relativen Startzeit aufweist.

6. Verfahren (400) nach Anspruch 2, das weiter Senden von Broadcast-Zuweisungsinformation auf einem Broadcast-Kanal aufweist, wobei die Broadcast-Zuweisungsinformation und die gemeinsame Zuweisungsinformation zusammen die kombinierte gemeinsame Zuweisungsinformation bilden.

7. Ein Verfahren zur Verwendung in einer Drahtlosendgerätvorrichtung (220), das Folgendes aufweist:
Empfangen, in einem einzelnen Funkblock, einer einzelnen Paketzuweisungsnachricht (502), die an die Drahtlosendgerätvorrichtung und an wenigstens eine weitere Drahtlosendgerätvorrichtung adressiert ist und Zuweisungsinformation enthält, wobei die Einzelpaketzuweisungsnachricht eine separate, temporäre Referenznummer für jede Drahtlosendgerätvorrichtung einer Vielzahl von Drahtlosendgerätvorrichtungen aufweist, die durch die Einzelpaketzuweisungsnachricht adressiert werden; und
Antworten auf die Einzelpaketzuweisungsnachricht durch Senden eines Signals (504) basierend auf der Zuweisungsinformation.

8. Verfahren nach Anspruch 7, das weiter Folgendes aufweist:
Empfangen der Einzelpaketzuweisungsnachricht (502), wenn die Einzelpaketzuweisungsnachricht sowohl gemeinsame Zuweisungsinformation, die für sowohl die Drahtlosendgerätvorrichtung als auch wenigstens eine weitere Drahtlosendgerätvorrichtung vorliegt, als auch spezifische Zuweisungsinformation, die für die Drahtlosendgerätvorrichtung spezifisch ist, aufweist; und
Antworten auf die Einzelpaketzuweisungsnachricht durch Senden eines Signals basierend auf der gemeinsamen Zuweisungsinformation und der spezifischen Zuweisungsinformation.

9. Eine Drahtlosnetzwerkvorrichtung (210) zum Zuweisen von Paketressourcen eines Drahtlosnetzwerks zu einer Vielzahl von Drahtlosendgeräten (220), wobei die Drahtlosnetzwerkvorrichtung Folgendes aufweist:
Mittel zum Empfangen (212) von Paketkanalanfragen;
Mittel zum Assoziieren (313) der Paketkanalanfragen mit Drahtlosendgeräten (220) mittels temporärer Referenznummern, die in den Paketkanalanfragen enthalten sind;
Mittel zum Antworten auf wenigstens einige der empfangenen Paketkanalanfragen durch Zuweisen von Paketressourcen an eine Vielzahl von Drahtlosendgeräten; und
Mittel zum Senden bzw. Übertragen (211), in einem einzelnen Funkblock, einer Einzelpaketzuweisungsnachricht, die an die Vielzahl von Drahtlosendgeräten adressiert ist, wobei die Einzelpaketzuweisungsnachricht die separate, temporäre Referenznummer für jedes Drahtlosendgerät der Vielzahl von Drahtlosendgeräten aufweist, die durch die Einzelpaketzuweisungsnachricht adressiert werden.

10. Drahtlosnetzwerkvorrichtung (210) nach Anspruch 9, wobei die Mittel zum Senden weiter Folgendes aufweisen:
Mittel zum Senden gemeinsamer Zuweisungsinformation, die für die Vielzahl von Drahtlosendgeräten gemeinsam vorliegt und spezifischer Zuweisungsinformation, die für individuelle der Vielzahl von Drahtlosnetzwerken spezifisch ist.

11. Drahtlosnetzwerkvorrichtung (210) nach Anspruch 10, wobei die Mittel zum Senden weiter Mittel aufweisen zum Senden der Einzelpaketzuweisungsnachricht, so dass die gemeinsame Zuweisungsinformation eine Anzeige einer grundlegenden, absoluten Rahmennummer aufweist, wobei die Vielzahl von Drahtlosengeräten ihre eigenen absoluten Rahmennummern relativ zu der grundlegenden, absoluten Rahmennummer berechnet.

12. Drahtlosnetzwerkvorrichtung nach Anspruch 11, wobei die Mittel zum Senden weiter Mittel aufweisen zum Senden der Einzelpaketzuweisungsnachricht, so dass die endgerätspezifische Zuweisungsinformation eine Anzeige eines Rahmennummerversatzwertes aufweist, der einen Versatz in einer Anzahl von Rahmen von der grundlegenden, absoluten Rahmennummer darstellt.

13. Eine Drahtlosendgerätvorrichtung (220), die Folgendes aufweist:
Mittel zum Empfangen (221), in einem einzelnen Funkblock, einer Einzelpaketzuweisungsnachricht (502), die an die Drahtlosendgerätvorrichtung und an wenigstens eine andere Drahtlosendgerätvorrichtung adressiert ist und die Zuweisungsinformation enthält, wobei die Einzelpaketzuweisungsnachricht eine separate, temporäre Referenznummer für jede Drahtlosendgerätvorrichtung einer Vielzahl von Drahtlosendgerätvorrichtungen aufweist, die durch die Einzelpaketzuweisungsnachricht adressiert werden; und
Mittel zum Antworten (222) auf die Einzelpaketzuweisungsnachricht durch Senden eines Signals (504) basierend auf der Zuweisungsinformation.

14. Drahtlosendgerätvorrichtung (220) nach Anspruch 13, wobei die Vorrichtung weiter betreibbar ist zum:
Empfangen der Einzelpaketzuweisungsnachricht (502), wenn die Einzelpaketzuweisungsnachricht sowohl gemeinsame Zuweisungsinformation, die für sowohl die Drahtlosendgerätvorrichtung als auch wenigstens eine weitere Drahtlosendgerätvorrichtung vorliegt, als auch spezifische Zuweisungsinformation, die für die Drahtlosendgerätvorrichtung spezifisch ist, aufweist; und
Antworten auf die Einzelpaketzuweisungsnachricht durch Senden eines Signals basierend auf der gemeinsamen Zuweisungsinformation und der spezifischen Zuweisungsinformation.

15. Ein computerlesbares Medium, das Instruktionen aufweist, die, wenn sie von einem Computer ausgeführt werden, die Funktionen nach einem der Ansprüche 1 bis 8 ausführen.

## Revendications

1. Procédé (400) pour affecter des ressources de paquets d'un réseau sans fil à une pluralité de terminaux sans fil (220), le procédé comprenant :
recevoir (401) des requêtes de canal de paquets (501) ;
associer (402) les requêtes de canal de paquets à des terminaux sans fil (220) au moyen de numéros de référence temporaires inclus dans les requêtes de canal de paquets ;
répondre à au moins l'une des requêtes de canal de paquets reçues en affectant (404) des ressources de paquets à une pluralité de terminaux sans fil ; et
transmettre (406) dans un seul bloc radio un seul message d'affectation de paquets (502) adressé à la pluralité de terminaux sans fil, l'unique message d'affectation de paquets comprenant le numéro de référence temporaire séparé pour chaque terminal sans fil de la pluralité de terminaux sans fils qui sont adressés par l'unique message d'affectation de paquets.

2. Procédé (400) selon la revendication 1, comprenant en outre la transmission (406) de l'unique message d'affectation de paquets de telle sorte que l'unique message d'affectation de paquets comprenne à la fois des informations d'affectation communes qui sont communes à la pluralité de terminaux sans fil et des informations d'affectation spécifiques qui sont spécifiques à certains terminaux individuels de la pluralité de terminaux sans fil.

3. Procédé (400) selon la revendication 2, comprenant en outre la transmission de l'unique message d'affectation de paquets de telle sorte que les informations d'affectation communes comprennent une indication d'un numéro de trame absolu de base, les terminaux de la pluralité de terminaux sans fil calculant leur propre numéro de trame absolu par rapport au numéro de trame absolu de base.

4. Procédé (400) selon la revendication 3, comprenant la transmission de l'unique message d'affectation de paquets de telle sorte que les informations d'affectation spécifiques aux terminaux comprennent l'indication d'une valeur de décalage en nombre de trames représentant un nombre de trames de décalage par rapport au numéro de trame absolu de base.

5. Procédé (400) selon la revendication 2, dans lequel l'affectation de la ressource de paquets comprend au moins l'une des étapes suivantes :
affecter un mode de codage et dans lequel la transmission comprend la transmission de l'unique message d'affectation de paquets de telle sorte que les informations d'affectation communes comprennent une indication du mode de codage,
affecter une fréquence de canal et un créneau temporel et dans lequel la transmission comprend la transmission de l'unique message d'affectation de paquets de telle sorte que les informations d'affectation communes comprennent une indication de la fréquence de canal et du créneau temporel,
affecter une fréquence de canal utilisée pour un canal de diffusion, et la transmission comprend la transmission de l'unique message d'affectation de paquets de telle sorte que les informations d'affectation communes comprennent une indication de la fréquence de canal utilisée pour le canal de diffusion, ou
affecter un temps de début relatif définissant un nombre de trames de différence par rapport à un numéro de trame correspondant à une trame contenant l'unique message d'affectation de paquets, et la transmission comprend la transmission de l'unique message d'affectation de paquets de telle sorte que les informations d'affectation spécifiques d'un terminal comprennent une indication du temps de début relatif.

6. Procédé (400) selon la revendication 2, comprenant en outre la transmission d'informations d'affectation de diffusion sur un canal de diffusion, les informations d'affectation de diffusion et les informations d'affectation communes formant ensemble des informations d'affectation communes combinées.

7. Procédé pour utilisation dans un dispositif terminal sans fil (220), comprenant :
recevoir dans un seul bloc radio un seul message d'affectation de paquets (502) adressé au dispositif terminal sans fil et à au moins un autre dispositif terminal sans fil et contenant des informations d'affectation, l'unique message d'affectation de paquets comprenant un numéro de référence temporaire séparé pour chaque dispositif terminal sans fil d'une pluralité de dispositifs terminaux sans fils qui sont adressés par l'unique message d'affectation de paquets ; et
répondre à l'unique message d'affectation de paquets en transmettant un signal (504) sur la base des informations d'affectation.

8. Procédé selon la revendication 7, comprenant en outre :
recevoir l'unique message d'affectation de paquets (502) lorsque l'unique message d'affectation de paquets comprend à la fois des informations d'affectation communes qui sont communes à la fois au dispositif terminal sans fil et audit au moins un autre dispositif terminal sans fil et des informations d'affectation spécifiques qui sont spécifiques au dispositif terminal sans fil ; et
répondre à l'unique message d'affectation de paquets en transmettant un signal sur la base des informations d'affectation communes et des informations d'affectation spécifiques.

9. Dispositif de réseau sans fil (210) pour affecter des ressources de paquets d'un réseau sans fil à une pluralité de terminaux sans fil (220), le dispositif de réseau sans fil comprenant :
des moyens pour recevoir (212) des requêtes de canal de paquets ;
des moyens pour associer (313) les requêtes de canal de paquets à des terminaux sans fil (220) au moyen de numéros de référence temporaires inclus dans les requêtes de canal de paquets ;
des moyens pour répondre à au moins l'une des requêtes de canal de paquets reçues en affectant des ressources de paquets à une pluralité de terminaux sans fil ; et
des moyens pour transmettre (211) dans un seul bloc radio un seul message d'affectation de paquets adressé à la pluralité de terminaux sans fil, l'unique message d'affectation de paquets comprenant le numéro de référence temporaire séparé pour chaque terminal sans fil de la pluralité de terminaux sans fils qui sont adressés par l'unique message d'affectation de paquets.

10. Dispositif de réseau sans fil (210) selon la revendication 9, dans lequel les moyens pour transmettre comprennent en outre :
des moyens pour transmettre des informations d'affectation communes qui sont communes à la pluralité de terminaux sans fil et des informations d'affectation spécifiques qui sont spécifiques à certains terminaux individuels de la pluralité de terminaux sans fil.

11. Dispositif de réseau sans fil (210) selon la revendication 10, dans lequel les moyens pour transmettre comprennent en outre des moyens pour transmettre l'unique message d'affectation de paquets de telle sorte que les informations d'affectation communes comprennent une indication d'un numéro de trame absolu de base, les terminaux de la pluralité de terminaux sans fil calculant leur propre numéro de trame absolu relativement au numéro de trame absolu de base.

12. Dispositif de réseau sans fil selon la revendication 11, dans lequel les moyens pour transmettre comprennent en outre des moyens pour transmettre l'unique message d'affectation de paquets de telle sorte que les informations d'affectation spécifiques d'un terminal comprennent l'indication d'une valeur de décalage en nombre de trames représentant un nombre de trames de décalage par rapport au numéro de trame absolu de base.

13. Dispositif terminal sans fil (220) comprenant :
des moyens pour recevoir (221) dans un seul bloc radio un seul message d'affectation de paquets (502) adressé au dispositif terminal sans fil et à au moins un autre dispositif terminal sans fil et contenant des informations d'affectation, l'unique message d'affectation de paquets comprenant un numéro de référence temporaire séparé pour chaque dispositif terminal sans fil d'une pluralité de dispositifs terminaux sans fil qui sont adressés par l'unique message d'affectation de paquets ; et
des moyens pour répondre (222) à l'unique message d'affectation de paquets en transmettant un signal (504) sur la base des informations d'affectation.

14. Dispositif terminal sans fil (220) selon la revendication 13, dans lequel l'autre dispositif est en outre actionnable pour :
recevoir l'unique message d'affectation de paquets (502) lorsque l'unique message d'affectation de paquets comprend à la fois des informations d'affectation communes qui sont communes à la fois au dispositif terminal sans fil et audit au moins un autre dispositif terminal sans fil et des informations d'affectation spécifiques qui sont spécifiques au dispositif terminal sans fil ; et
répondre à l'unique message d'affectation de paquets en transmettant un signal sur la base des informations d'affectation communes et des informations d'affectation spécifiques.

15. Support lisible par un ordinateur comprenant les instructions qui lorsqu'elles sont réalisées par un ordinateur réalisent les fonctions de l'une quelconque des revendications 1 à 8.
